# EUROPEAN PATENT APPLICATION

(11) **EP 1 811 436 A1**
(43) Date of publication of application: **25.07.2007**
(21) Application number: 06290165.7
(22) Date of filing: 23.01.2006
(51) Int. Cl.: G06K 19/077

(54) **Electronic module suitable for identification documents and method for manufacturing such a module**

(71) Applicant: Axalto SA, 92120 Montrouge (FR)
(72) Inventor: Vere, Dénis, c/o Axalto SA, 92120 Montrouge (FR); Jean, Xavier, c/o Axalto SA, 92120 Montrouge (FR); Borg, Norbert, c/o Axalto SA, 92120 Montrouge (FR)
(74) Representative: Cassagne, Philippe M.J.

(57) **Abstract**

The invention relates to an electronic module intended to be embedded in an identification document. The module includes an antenna (21) positioned onto a flexible support layer (20) and a radio frequency micro-controller (26) affixed to said flexible support layer (20) and electrically connected to said antenna (21). The flexible support layer (20) further comprises an area (27), said area including a portion of the antenna and being partially cut out in order to be unfolded along a hinge (28).

## Description

The invention relates to an electronic module intended to be inserted in identification documents such as passports, made of paper booklets, of paper or plastic card, and which contain personal data of their holder such as his/her name, birth date, address, photograph, etc. More particularly, it relates to a module, also called coil-on-module thereafter, that allows a radio frequency communication of good quality with contactless readers.

With the development of electronic identification documents, process have been implemented to include electronic devices, comprising an antenna and a radio frequency microcontroller electrically connected to said antenna, inside flexible document pages, flexible document covers, or flexible external layers in an efficient and robust way.

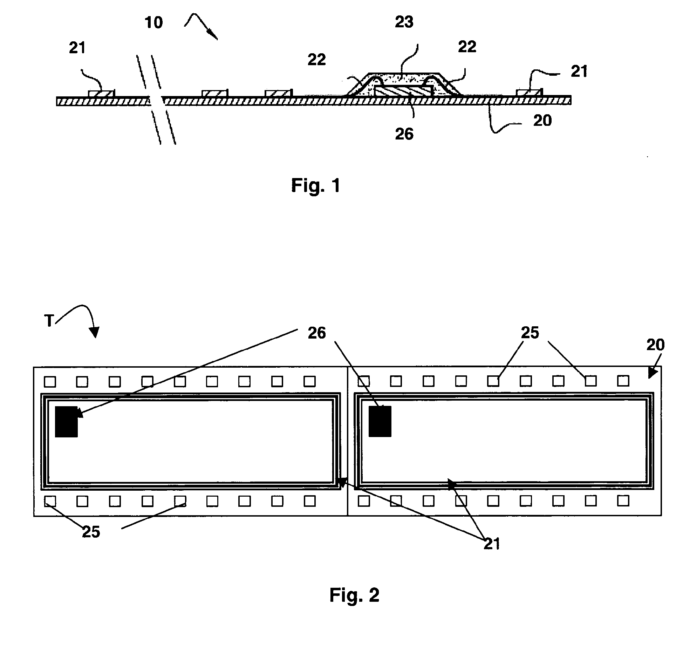

In figure 1, a prior art coil-on-module is schematically illustrated. This module is called coil-on-module because the antenna is part of the module itself and not part of a separate body like an inlet plastic sheet. The module 10 includes a flexible support layer 20. This support layer 20 is made for example of a polymer material such as epoxy glass, PET (polyethylene terephtalate), polyimide or Kapton^{™}. Its thickness is in the range 25 - 150 µm, in order to achieve a high degree of flexibility. Using standard manufacturing techniques of the electronics printed board industry, an antenna 21 is etched onto the support layer 20. This antenna 21 has two electric pads on which a radio-frequency microcontroller 26 is connected by wire bonding 22 for example. An epoxy resin 23 is then dispatched on top of the microcontroller 26 and its bonding wires, in order to ensure their protection.

The radiofrequency microcontroller component incorporates the RFID (Radio Frequency Identification Device) technology. Therefore, it is capable of contactless communication with a reader according to communication protocols that are disclosed in the ISO-14443A and ISO-14443B standards.

The flexible support 20 of the current coil-on-modules is cut off from a tape, which is 35 mm wide as those which are usually used in smart card industries. The antennas of future modules, which are etched onto the tape, have a rectangular shape with dimensions which are roughly 80 mm length and 30 mm wide. Typically, the width of the antennas is limited by the width of the tape used. Consequently, the dimensions of these antennas are suitable for smart cards whose dimensions are standardized by ISO-7810 and ISO-7816 standards.

However, this antenna's shape is not enough for several chips. Namely, some chips designed for identification documents don't have good behaviour towards such small antenna. In fact, these to much small dimensions of the antenna affect the performance of the communication.

Moreover, for reasons of interoperability with a wide range of contactless readers, national authorities of many countries recommend to use antenna of class 1 for the electronic module that must be embedded in identification documents. Antenna of class 1, whose specifications are defined in IEEE 802.16 standard, must have dimensions which are at least 64 mm length x 34 mm wide and at the maximum of 81 mm length x 49 mm wide. Such antenna of class 1 is also of low cost, so that it allows advantageously a mass production of low cost passports or other identification documents for general public.

Considering the above, a first problem intended to be solved by the invention is to develop an electronic module adapted for being embedded in an identification document, said electronic module including an antenna positioned onto a flexible support layer and a radio frequency micro-controller affixed to said flexible support layer and electrically connected to said antenna, said antenna allowing an improved radio frequency communication with wide range of contactless readers.

The solution of the invention to this problem relates to the fact that the flexible support layer further comprises an area, said area including a portion of the antenna and being partially cut out in order to be unfolded along a hinge.

Thus, when the cut out area is unfolded along a hinge, a portion of the antenna is moved in such a manner that its width, and consequently its surface, is increased. The thus increased surface of the antenna allows good communications radio frequency with contactless readers.

Moreover, another problem intended to be solved by the invention is to develop a method for manufacturing an electronic module, said method comprising the steps of positioning an antenna on a flexible layer, affixing a micro-controller onto said flexible support layer and electrically connecting the micro-controller to said antenna, said method allowing to make an antenna having a shape that does not affect the radio frequency communication with contactless readers.

The solution of the invention to this problem consists in cutting out an area of the flexible layer, said area including a portion of the antenna, in order to increase the surface of the antenna when the area is unfolded along a hinge.

Thus, the process has the advantage that no more investment, such as the purchase of new machine for example, is necessary to increase the antenna's shape because it is achieved on a tape of usual size.

The invention relates also to a tape comprising etched antennas that have a width higher than that of the tape, said tape including areas that are partially cut out, each area supporting a portion of an antenna and allowing to increase the surface of this antenna when it is unfolded along a hinge.

For a better understanding of the present invention, reference will now be made, by way of example, to the following description of the invention and to the accompanying drawings, in which:
- figure 1, already described, is a schematic cross-section illustrating a coil-on-module according to the prior art;
- figure 2, is a schematic front view of a tape usually used in the smart card industry;
- figures 3A and 3B, are schematic front views of a coil-on-module according to the present invention,
- figure 3C, is a schematic zoom of a portion of the coil-on-module of figure 3B,
- figure 4, is a schematic view of the coil-on-module of figures 3A and 3B embedded in an electronic identification document.

Corresponding numerals and symbols in the figures refer to corresponding parts, unless otherwise indicated.

In figure 2, the tape T is usually used for manufacturing printed circuits that are used in particular in smart card industry. The tape T presents some perforations 25 close to its longitudinal edges. These perforations are used to move the tape during the manufacture of the modules, prior to their cutting off. First, antennas 21 are etched onto the tape T and then, radio-frequency micro-controllers 26 are affixed on the tape and electrically connected to contact pads of the antennas by conventional process. Radio-frequency microcontrollers are then coated in a resin in order to be protected against mechanical strains. The thus obtained electronic coil-on-modules are finally cut off from the tape T and embedded in identification documents, such as passport, made of paperboard or paper booklet, of plastic or paper for example. Typically, tapes T that are usually used in smart cards industry have a width of 35 mm, in order to be embedded in plastic smart card that have standardized dimensions defined by ISO-7810 and ISO-7816 standards.

However, in the case of the identification documents applications, such as electronic passport applications, chips that are designed for larger antennas don't have good behaviour on the antennas that are etched onto the tape T because these antennas are too much small, so that they affect the performance of the communication and the interoperability.

Therefore, it is necessary to increase the shape of the antenna of the coil-on-modules that are intended for identification documents such as electronic passport.

Nevertheless, the transformation of the antenna shape should not involve over cost. Consequently, it is important not to change machines that are used in smart card plants.

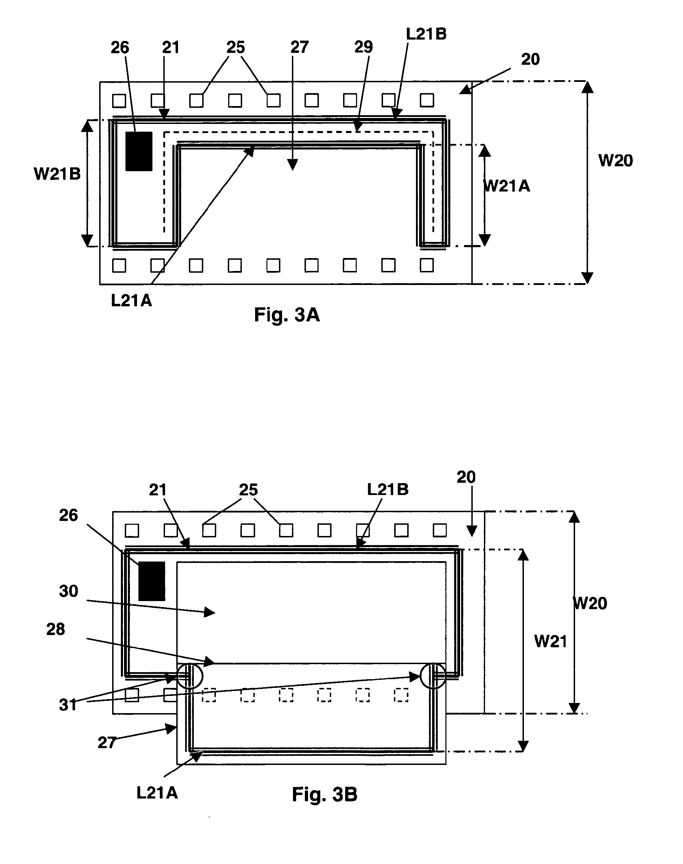

In a preferred embodiment illustrated by figures 3A and 3B, the antenna 21 of each electronic module is etched so that it has a "U" shape. Thus, the antenna has two longitudinal edges L21A, L21B that are close to each other, one L21A of them being smaller than the other L21B. The antenna has also four edges in the width W21A, W21B, two W21A of them being smaller than the two other W21B. Moreover, the edges in the width W21A and W21B are slightly lower than those W20 of the flexible support 20.

An area 27 of the flexible support layer 20 is defined and partially cut out along the dotted lines 29 on figure 3A. This area 27 is designed in such a manner that it includes a portion of the antenna 21, i.e. its smallest longitudinal edge L21A and its two smallest edges in the width W21A. Thus, the area 27 supports the internal edges of the U-shaped antenna. A longitudinal edge 28 of the area 27 is not cut so that it forms a hinge when the area is unfolded.

Of course, any other shape of antenna can be used provided that the unfolded antenna is in the class 1.

Figure 3B illustrates the electronic module when the area 27 of the flexible support is unfolded along the hinge 28. An opening 30 then appears in the flexible support. The thus unfolded area 27 extends the width W21 of the antenna 21 which may become higher than that W20 of the flexible support 20 used. Namely, the new width W21 of the antenna is slightly the sum of the two widths W21A and W21B of the U-shaped antenna.

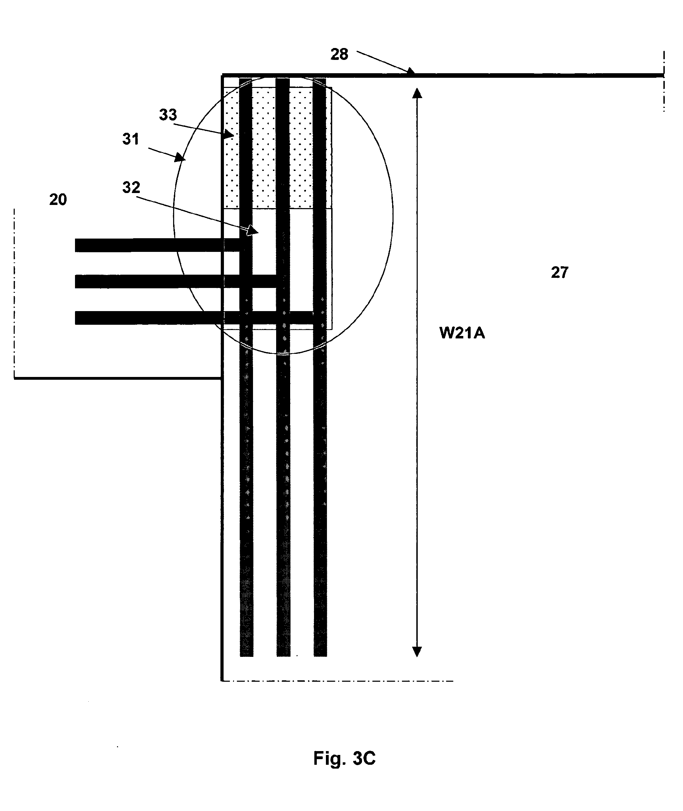

Figure 3C is a schematic zoom of a zone where the coils of the antenna are crossed and superimposed when the area 27 is unfolded along the hinge 28.

Precautions must be taken in order to avoid short-circuits when the area 27 is unfolded. Namely, as illustrated on figures 3B and 3C, a portion of the conductive coils of the antenna 21 supported by the area 27 will cover a portion of the conductive coils of the antenna etched onto the remaining flexible substrate 20. Therefore, at least such portions of conductive coils must be protected against short-circuit at places 31 where they are crossed. For that, at least these portions of conductive coils may be insulated by means of any insulating resin 32, such as an epoxy resin for example or other.

Another embodiment to prevent conductive turns breaking along the hinge 28 on these portions 31 of conductive coils consists in covering it by means of a Z-axis conductive resin 33. Such an anisotropic resin can be applied at places 31 where conductive coils of the part W21A are superimposed on themselves when the area 27 is unfolded along the hinge 28. The z-axis conductive resin allows an electrical conduction between superimposed coils and avoid a conduction between adjacent coils. Thus, the resin allows to overcome a possible break of the coils of the antenna along the axis 28 of the folding.

The step of cutting out the area 27 may be made at any stage of the manufacturing process of the electronic module. Namely, area 27 may be cut out either just before or just after the etching of the antenna, or at a final stage after affixing, electrically connecting the radiofrequency micro-controller and cutting off the electronic module from the tape T. Preferably, it is made just before the cutting off the electronic modules from the tape T.

The thus obtained coil-on-module can be inserted in all types of identification documents, such as passport.

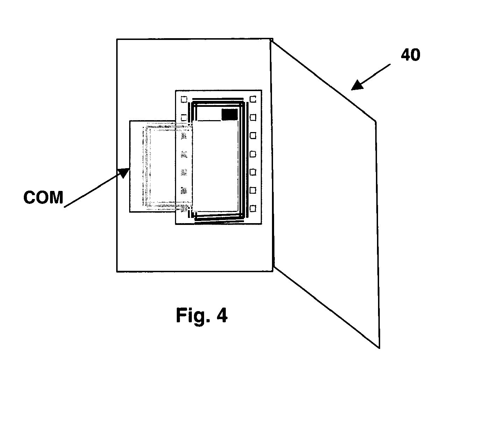

Figure 4 schematically illustrates the embedding of the coil-on-module COM in the cover or the internal page of an electronic passport 40, made of paper booklet for example. The coil-on-module is laminated between at least two flexible layers so that it is invisible in the eye.

The thus described electronic coil-on-module and its manufacturing process bring a lot of advantages. Among these advantages, the radio frequency micro-controller is affixed on the flexible support layer with the same tools as usually, because the tape used is the same one as usually. On final devices such as passport or other electronic documents, the antenna is unfolded to offer a larger antenna surface for a better electromagnetic coupling and a better behaviour with a wide range of contactless readers, and to be class 1 compliant.

Moreover, the opening 30 defined in the flexible support 20 of the coil-on-module when the area 27 is unfolded confers a great advantage for securely embedding the coil-on-module between two sheets of an identification document. Namely, the glue used during the lamination process fills the opening 30, so that it becomes impossible to pull out the module from the identification document by delamination of the sheets, without destroying the module.

Another advantage is that the hinge 28 creates an incipient crack on the support layer 20, so that it is not possible to delaminate the electronic identification document without destroying the coils of the antenna, i.e the module.

These two last advantages described just above are very important because they constitute good prevention against fraud.

Finally, due to the fact that the flexible support layer is made from the usual tape, there is no over cost on raw material.

## Claims

1. Electronic module adapted to be embedded in an identification document, said electronic module including an antenna (21) positioned onto a flexible support layer (20) and a radio frequency micro-controller (26) affixed to said flexible support layer (20) and electrically connected to said antenna (21), wherein said flexible support layer (20) further comprises an area (27), said area including a portion (L21A, W21A) of the antenna (21) and being partially cut out in order to be unfolded along a hinge (28).

2. Electronic module of claim 1, wherein at least portions of conductive coils of the antenna (21) that are crossed when the area (27) is unfolded, are protected by means of an insulating resin (32).

3. Electronic module of claim 1 or 2, wherein at least portions of conductive coils of the antenna (21) that are superimposed on themselves when the area (27) is unfolded, are covered by means of a z-axis conductive resin (33) to avoid a break of the coils along the hinge (28).

4. Electronic module of claim 1, wherein antenna (21) is class 1 compliant.

5. Electronic module of claim 1, wherein the antenna (21) has a "U" shape.

6. Electronic module of claim 5, wherein the area (27) supports the internal edges (L21A, W21A) of the U-shaped antenna (21).

7. Identification document (40) comprising an electronic module (COM) of anyone of previous claims 1 to 6, said electronic module being embedded between at least two flexible sheets.

8. Method for manufacturing an electronic module, said method comprising the steps of positioning an antenna (21) on a flexible layer (20), affixing a radiofrequency micro-controller (26) onto said flexible support layer (20), and electrically connecting the micro-controller (26) to said antenna (21), wherein said method consists in cutting out an area (27) of the flexible support layer, said area including a portion (L21A, W21A) of the antenna (21), in order to increase the surface of the antenna (21) when the area (27) is unfolded along a hinge (28).

9. Method of claim 8, wherein an insulating resin (32) is applied on portions of conductive coils of the antenna (21) that are crossed when the area (27) is unfolded.

10. Method of claim 8 or 9, wherein a z-axis conductive resin (33) is applied on portions of conductive coils of the antenna (21) that are superimposed on themselves when the area (27) is unfolded.

11. A tape (T) comprising etched antennas (21) that have a width (W21) higher than that of the tape (W20), said tape including areas (27) that are partially cut out, each area supporting a portion (L21A, W21A) of an antenna (21) and allowing to increase the surface of this antenna when it is unfolded along a hinge (28).
